# EUROPEAN PATENT APPLICATION

(11) **EP 4 620 542 A1**
(43) Date of publication of application: **24.09.2025**
(21) Application number: 24215865.7
(22) Date of filing: 27.11.2024
(51) Int. Cl.: A63F 13/24, A63F 13/92, A63F 13/98

(54) **GAME CONTROLLER WITH ADJUSTABLE INTERFACE POSITION**

(30) Priority: 20.03.2024 CN 202420546946 U
(71) Applicant: Dongguan King Sheng Electronics Technology Co.,Ltd., Dongguan, Guangdong 523000 (CN)
(72) Inventor: WANG, Jianwu, Dongguan, 523000 (CN)
(74) Representative: Metida

(57) **Abstract**

A game controller includes a main body, which is provided with a back plate, a connector and an adjusting mechanism. The adjusting mechanism includes a mounting frame arranged on the main body. A first slide rail and a second slide rail are provided on the mounting frame. A first block is slidably provided on the first slide rail, and a second block is slidably provided on the second slide rail. The connector is provided on the first block. A sliding direction of the second block is not parallel to a sliding direction of the first block. Each of the first block and the second block has an inclined abutting surface. A spring is provided on the mounting frame, and is configured to cooperate with the second block.

## Description

### CROSS-REFERENCE TO RELATED APPLICATIONS

This application claims the benefit of priority from Chinese Patent Application No. 202420546946.7, filed on March 20, 2024. The content of the aforementioned application, including any intervening amendments made thereto, is incorporated herein by reference in its entirety.

### TECHNICAL FIELD

This application relates to game controllers, and more particularly to a game controller with adjustable interface position.

### BACKGROUND

For those game controllers which are designed to be extendable to hold the mobile phone, the connector for connection with the mobile phone is typically positioned on the clamping surface of the game controller, so as to utilize the clamping force for ensuring the stable connection.

To adapt to mobile phones of varying thicknesses (the thickness diversity may be caused by protective cases), Chinese patent No. 219398928U discloses a game controller with a movable interface, which features a vertical movement assembly capable of vertically adjusting the position of the interface assembly relative to a connecting plate. Specifically, the vertical movement assembly includes a second elastic block, a second spring, and a support base; the support base is provided on a main body of the game controller; the second elastic block is provided opposite to the support base in a vertical direction; a first end of the second elastic block abuts against the interface assembly, and a second end of the second elastic block abuts against a first end of the second spring; and a second end of the second spring abuts against the support base, such that the second elastic block always tends to move toward the interface assembly. Consequently, the second elastic block is capable of elevating the interface assembly to achieve the upward movement of the interface assembly.

When horizontally clamping the mobile phones on the market and connecting the mobile phone with the interface assembly, the overall thickness of the game controller can be understood as the thickness of the mobile phone. In this case, if the second spring is arranged as above, the game controller needs to be thicker to provide sufficient space for elastic deformation of the second spring. However, this design will be less suitable for users with smaller hands, and needs to be further optimized.

### SUMMARY

An object of the disclosure is to provide a game controller with adjustable interface position to overcome the defects in the prior art.

Technical solutions of the present disclosure are described as follows.

This application provides a game controller with adjustable interface position, comprising:
a main body; wherein the main body is provided with a back plate, a connector and an adjusting mechanism;
the back plate is configured to support a to-be-connected device; the connector is configured for connection with the to-be-connected device; and the adjusting mechanism is configured to adjust a position of the connector;
the adjusting mechanism comprises a mounting frame arranged on the main body; the mounting frame is provided with a first slide rail extending in a direction from a front side of the main body to a rear side of the main body; the first slide rail is slidably provided with a first block structure; a second slide rail is provided on the mounting frame, and a second block structure is slidably provided on the second slide rail; and the second block structure is configured to convert a vertical motion of the connector into a horizontal motion of the connector;
the connector is provided on the first block structure; the first block structure is configured for adjusting the position of the connector; a sliding direction of the second block structure on the second slide rail is not parallel to a sliding direction of the first block structure on the first slide rail, each of the first block structure and the second block structure has an inclined abutting surface; and the inclined abutting surface of the first block structure is configured to fit the inclined abutting surface of the second block structure; and
the mounting frame is further provided with a spring configured to cooperate with the second block structure; and the spring is configured to be subject to elastic deformation under the action of the second block structure and the mounting frame in response to a case that the second block structure slides along the second slide rail.

In some embodiments, an angle between the sliding direction of the second block structure on the second slide rail and the sliding direction of the first block structure on the first slide rail is 75-105°.

In some embodiments, the sliding direction of the second block structure on the second slide rail is perpendicular to the sliding direction of the first block structure on the first slide rail.

In some embodiments, the sliding direction of the second block structure on the second slide rail is along a direction from a first side of the main body to a second side of the main body.

In some embodiments, the first slide rail comprises a first rail segment adjacent to the second block structure, and a second rail segment away from the second block structure;
the first block structure comprises a sliding block slidably provided on the first rail segment; the sliding block has the inclined abutting surface to fit the second block structure; the first block structure further comprises a connection portion slidably provided on the second rail segment, and the connection portion is configured for connection with the connector; and
the connection portion is provided with a rotating shaft; the second rail segment is configured as a hole fitting the rotating shaft and extending in the direction from the front side of the main body to the rear side of the main body; the rotating shaft is configured to slide in the hole; and the connection portion is configured to abut against the sliding block in the direction from the front side of the main body to the rear side of the main body.

In some embodiments, front and rear sides of the connection portion are each provided with the rotating shaft.

In some embodiments, the main body comprises a first clamping portion, a second clamping portion, and an extendable connecting mechanism; the first clamping portion is opposite to the second clamping portion; and the extendable connecting mechanism is configured to extendably connect the first clamping portion with the second clamping portion;
a side of the first clamping portion for clamping the to-be-connected device is provided with an opening extending in the direction from the front side of the main body to the rear side of the main body; and the connector is configured to extend from an interior of the first clamping portion to outside through the opening for connection with the to-be-connected device.

In some embodiments, the spring is a compression spring.

Compared to the prior art, the present disclosure has the following beneficial effects.

Through the arrangement of the second slide rail, the second block structure, the inclined abutting surface, and the spring, when adjusting the position of the connector relative to the back plate in the front-rear direction, the motion of the first block structure along the front-rear direction is converted into the sliding motion of the second block structure in a direction that is not parallel to the front-rear direction. As a result, the arrangement direction of the spring is altered to deviate from the front-rear direction, reducing the thickness of the game controller. Such design makes the game controller more suitable for users with smaller hands.

The technical solutions of the present disclosure will be described in further detail below with reference to the accompanying drawings and embodiments.

### BRIEF DESCRIPTION OF THE DRAWINGS

In order to illustrate the technical solutions in the embodiments of the present disclosure or the prior art more clearly, the accompanying drawings needed in the description of the embodiments or prior art will be briefly described below. Obviously, presented in the accompanying drawings are only some embodiments of the present disclosure, and for those of ordinary skill in the art, other accompanying drawings can be obtained from the structures illustrated in these drawings without making creative effort.
Fig. 1 is a perspective view of a game controller in accordance with an embodiment of the present disclosure;
Fig. 2 is a front view of the game controller in accordance with an embodiment of the present disclosure;
Fig. 3 is a sectional view of the game controller in accordance with an embodiment of the present disclosure along an A-A line in Fig. 2; and
Fig. 4 is the sectional view of the game controller in accordance with an embodiment of the present disclosure along a B-B line in Fig. 2.
In the figures: 1-first clamping portion; 11-back plate; 12-connector; 131-mounting frame; 132-first slide rail; 1321-first rail segment; 1322-second rail segment; 133-first block structure; 1331-sliding block; 1332-connection portion; 134-second slide rail; 135-second block structure; 136-inclined abutting surface; 137-spring; and 14-opening.

### DETAILED DESCRIPTION OF EMBODIMENTS

The present disclosure will be further clearly and completely described below with reference to the embodiments and accompanying drawings. Obviously, described herein are merely some embodiments of the present disclosure, rather than all embodiments. Based on the embodiments provided herein, all other embodiments obtained by those of ordinary skill in the art without making creative effort shall fall within the scope of the present disclosure.

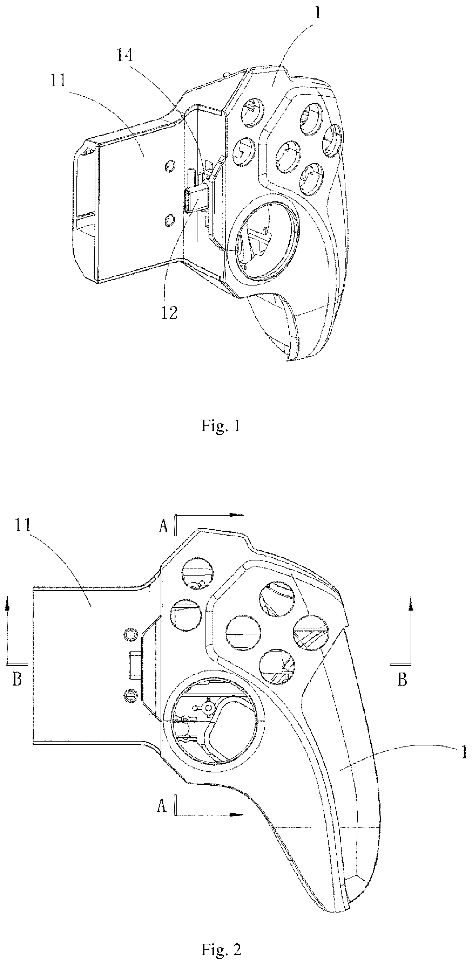

An embodiment illustrated in Figs. 1-4 provides a game controller with adjustable interface position, which includes a main body. The main body is provided with a back plate 11 for supporting a to-be-connected device, a connector 12 for connection with the to-be-connected device, and an adjusting mechanism for adjusting position of the connector 12.

The adjusting mechanism includes a mounting frame 131 arranged on the main body. The mounting frame 131 is provided with a first slide rail 132 extending in a direction from a front side of the main body (i.e., the side of the game controller facing toward the user in use) to a rear side of the main body (i.e., the side away from the user in use). The first slide rail 132 is slidably provided with a first block structure 133. A second slide rail 134 is provided on the mounting frame 131. A second block structure 135 is slidably provided on the second slide rail 134, and is configured to convert a vertical motion of the connector 12 into a horizontal motion of the connector 12.

The connector 12 is provided on the first block structure 133. The first block structure 133 is configured for adjusting the position of the connector 12. Adjusting the position of the connector 12 in the direction from the front side of the main body to the rear side of the main body can correspondingly cause the first block structure 133 to slide on the first slide rail 132 in that same direction.

A sliding direction of the second block structure 135 on the second slide rail 134 is not parallel to a sliding direction of the first block structure 133 on the first slide rail 132. Each of the first block structure 133 and the second block structure 135 has an inclined abutting surface 136, and the inclined abutting surface 136 of the first block structure 133 is configured to fit the inclined abutting surface 136 of the second block structure135.

The mounting frame 131 is further provided with a spring 137 configured to cooperate with the second block structure 135. The spring 137 is configured to be subject to elastic deformation under the action of the second block structure 135 and the mounting frame 131 in response to a case that the second block structure 135 slides along the second slide rail 134.

Through the arrangement of the second slide rail 134, the second block structure 135, the inclined abutting surface 136, and the spring 137, when adjusting the position of the connector 12 relative to the back plate 11 in the front-rear direction, the motion of the first block structure 133 along the front-rear direction is converted into the sliding motion of the second block structure 135 in a direction that is not parallel to the front-rear direction. As a result, the arrangement direction of the spring 137 is altered to deviate from the front-rear direction, reducing the thickness of the game controller. Such design makes the game controller more suitable for users with smaller hands.

Through the inclined abutting surface 136, the directional conversion enables the movement of the first block structure 133 along the front-rear direction to be infinitely transformed into the sliding motion of the second block structure 135. Such conversion allows the spring 137 to exert elastic pressure on the first block structure 133 in real-time through the second block structure 135, effectively ensuring the accuracy of the position adjustment for the connector 12.

In some embodiments, the spring is a compression spring. A spring positioning post can be arranged on the second block structure 135 and another on the mounting frame 131. The spring positioning post is configured to penetrate into one end of a helical-shaped compression spring to position it, thereby preventing it from shifting when compressed.

In some embodiments, an angle between the sliding direction of the second block structure 135 on the second slide rail 134 and the sliding direction of the first block structure 133 on the first slide rail 132 is 75-105°.

In some embodiments, the sliding direction of the second block structure 135 on the second slide rail 134 is perpendicular to the sliding direction of the first block structure 133 on the first slide rail 132.

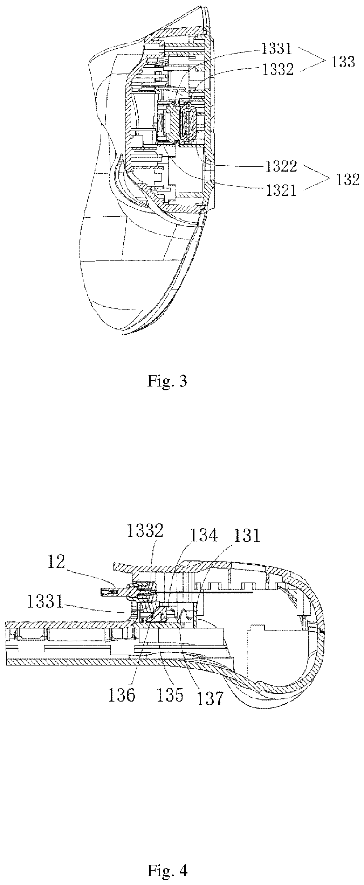

As shown in Fig. 4, the sliding direction of the second block structure 135 on the second slide rail 134 is along a direction from a first side of the main body (i.e., the left side of the game controller facing toward the user in use) to a second side of the main body (i.e., the right side of the game controller facing toward the user in use). Through capitalizing on the ample length along the direction from the first side of the main body to the second side of the main body of the game controller, it becomes feasible to effectively curtail the overall thickness of the game controller. Meanwhile, this can ensure that the connector 12 is capable of undergoing elastic position adjustment in the direction from the front side of the main body to the rear side of the main body, all without incurring substantial dimensional alterations in other directions.

In this embodiment, the first slide rail 132 includes a first rail segment 1321 adjacent to the second block structure 135, and a second rail segment 1322 away from the second block structure 135.

The first block structure 133 includes a sliding block 1331 slidably provided on the first rail segment 1321. The sliding block 1331 has the inclined abutting surface 136 to fit the second block structure 135. The first block structure 133 further includes a connection portion 1332 slidably provided on the second rail segment 1322.

The connection portion 1332 is provided with a rotating shaft. The second rail segment 1322 is configured as a hole fitting the rotating shaft and extending in the direction from the front side of the main body to the rear side of the main body. The rotating shaft is configured to slide in the hole. The connection portion 1332 is configured to abut against the sliding block 1331 in the direction from the front side of the main body to the rear side of the main body.

With the ability to adjust positions via sliding, by means of the second rail segment 1322 and the connection portion 1332, the connection portion 1332 can pivotally connect with the first rail segment 1321 and the mounting frame 131 through the rotating shaft. Consequently, the connector 12 can tilt forward when being inserted into the to-be-connected device, thus facilitating its connection with the to-be-connected device.

Front and rear sides of the connection portion 1332 are each provided with the rotating shaft, which corresponds to the second rail segment 1322, enhancing stability during both sliding and rotation.

The mounting frame 131 can be detachably provided on the main body. In an embodiment, a portion of the first rail segment 1321 is integrally formed with the main body, while a portion of the second rail segment 1322 and the second slide rail 134 are attached to the main body using screws.

In an embodiment, the main body includes a first clamping portion 1, a second clamping portion, and an extendable connecting mechanism. The first clamping portion 1 is opposite to the second clamping portion. The extendable connecting mechanism is configured to extendably connect the first clamping portion 1 with the second clamping portion. A side of the first clamping portion 1 for clamping the to-be-connected device is provided with an opening 14 extending in the direction from the front side of the main body to the rear side of the main body. The connector 12 is configured to extend from an interior of the first clamping portion 1 to outside through the opening 14 for connection with the to-be-connected device.

It should be noted that the above embodiments are only used to illustrate the technical solutions of the present disclosure, rather than limiting the disclosure. Although the present disclosure has been described in detail with reference to the above embodiments, those of ordinary skill in the art could still make various modifications and substitutions to the technical solutions recited in the above embodiments. It should be understood that such modifications or substitutions made without departing from the spirit of the disclosure shall fall within the scope of the present disclosure defined by the appended claims.

## Claims

1. A game controller with adjustable interface position, comprising:
a main body;
wherein the main body is provided with a back plate, a connector and an adjusting mechanism; the back plate is configured to support a to-be-connected device; the connector is configured for connection with the to-be-connected device; and the adjusting mechanism is configured to adjust a position of the connector;
the adjusting mechanism comprises a mounting frame arranged on the main body; the mounting frame is provided with a first slide rail extending in a direction from a front side of the main body to a rear side of the main body; the first slide rail is slidably provided with a first block structure; a second slide rail is provided on the mounting frame, and a second block structure is slidably provided on the second slide rail; and the second block structure is configured to convert a vertical motion of the connector into a horizontal motion of the connector;
the connector is provided on the first block structure; the first block structure is configured for adjusting the position of the connector; a sliding direction of the second block structure on the second slide rail is not parallel to a sliding direction of the first block structure on the first slide rail; each of the first block structure and the second block structure has an inclined abutting surface; and the inclined abutting surface of the first block structure is configured to fit the inclined abutting surface of the second block structure; and
the mounting frame is further provided with a spring configured to cooperate with the second block structure; and the spring is configured to be subject to elastic deformation under the action of the second block structure and the mounting frame in response to a case that the second block structure slides along the second slide rail.

2. The game controller of claim 1, wherein an angle between the sliding direction of the second block structure on the second slide rail and the sliding direction of the first block structure on the first slide rail is 75-105°.

3. The game controller of claim 2, wherein the sliding direction of the second block structure on the second slide rail is perpendicular to the sliding direction of the first block structure on the first slide rail.

4. The game controller of claim 3, wherein the sliding direction of the second block structure on the second slide rail is along a direction from a first side of the main body to a second side of the main body.

5. The game controller of claim 1, wherein the first slide rail comprises a first rail segment adjacent to the second block structure, and a second rail segment away from the second block structure;
the first block structure comprises a sliding block slidably provided on the first rail segment; the sliding block has the inclined abutting surface to fit the second block structure; the first block structure further comprises a connection portion slidably provided on the second rail segment, and the connection portion is configured for connection with the connector; and
the connection portion is provided with a rotating shaft; the second rail segment is configured as a hole fitting the rotating shaft and extending in the direction from the front side of the main body to the rear side of the main body; the rotating shaft is configured to slide in the hole; and the connection portion is configured to abut against the sliding block in the direction from the front side of the main body to the rear side of the main body.

6. The game controller of claim 5, wherein front and rear sides of the connection portion are each provided with the rotating shaft.

7. The game controller of claim 1, wherein the main body comprises a first clamping portion, a second clamping portion, and an extendable connecting mechanism; the first clamping portion is opposite to the second clamping portion; and the extendable connecting mechanism is configured to extendably connect the first clamping portion with the second clamping portion;
a side of the first clamping portion for clamping the to-be-connected device is provided with an opening extending in the direction from the front side of the main body to the rear side of the main body; and the connector is configured to extend from an interior of the first clamping portion to outside through the opening for connection with the to-be-connected device.

8. The game controller of claim 1, wherein the spring is a compression spring.
